# EUROPÄISCHE PATENTANMELDUNG

(11) **EP 3 133 706 A1**
(43) Veröffentlichungstag der Anmeldung: **22.02.2017**
(21) Anmeldenummer: 15181538.8
(22) Anmeldetag: 19.08.2015
(51) Int. Cl.: H02G 5/02, H02B 3/00

(54) **VERFAHREN ZUR INSTALLATION VON STROMSCHIENEN**

(71) Anmelder: Zurecon AG, 9053 Teufen AR (CH)
(72) Erfinder: PFLUGER, Gerd, 4625 Oberbuchsiten (CH)
(74) Vertreter: Rutz & Partner

(57) **Zusammenfassung**

Das Verfahren dient der Installation von Stromschienen (3) in wenigstens zwei im Bereich der Decke (2) montierten Befestigungsvorrichtungen (1) eines Gebäudes, die je ein Tragelement (13) und zwei voneinander beanstandete Gewindestangen (12) aufweisen, wobei wenigstens eine zu installierende Stromschiene (3) von unten zwischen die Gewindestangen (12) eingeführt und das Tragelement (13) anschliessend mithilfe von ersten Schraubenmuttern (122) mit den Gewindestangen (12) verbunden wird. Erfindungsgemäss werden die Gewindestangen (12) aller Befestigungsvorrichtungen (1) je mit einer der ersten Schraubenmutter (122) verbunden, die auf die Höhe von Punkten einer gemeinsamen Ebene eingedreht werden, die von Laserstrahlen einer Laservorrichtung (9) an den Gewindestangen (12) angezeigt werden, wonach die zu installierenden Stromschienen (3) hochgezogen, die Tragelemente (13) an den ersten Schraubenmuttern (122) fixiert und die Stromschienen (3) auf die Tragelemente (13) abgesenkt werden.

## Beschreibung

Die Erfindung betrifft ein Verfahren zur Installation von Stromschienen in einem Gebäude oder einem Tunnel.

Für die Übertragung von Strom mit hoher Leistung, hoher Sicherheit und Zuverlässigkeit werden Stromschienen als Übertragungsleitungen zwischen Transformatoren, Haupt- und Unterverteilern in Fabrikhallen, Gewerbe- und Verwaltungsgebäuden oder auch als Steigleitungen in Hochbauten eingesetzt. Stromschienen und dafür vorgesehene Installationsvorrichtungen sind z.B. aus [1], Produktkatalog "Niederspannungs-Schienenverteiler LANZ HE 2.5.2" der LANZ OENSINGEN AG vom Januar 2013 bekannt. Weitere Montagevorrichtungen sind aus [2], Produktkatalog "MULTIFIX" der LANZ OENSINGEN AG vom August 2001 bekannt.

Zur Verbindung der einzelnen Stromschienenbauteile sind Kupplungen verwendbar, wie sie in [1], Seite 8 beschrieben sind. Durch diese Kupplungen erfolgt eine elektrische und mechanische Kopplung.

Die Installation von Leitungen, Einrichtungen und Geräten am und im Baukörper wird traditionellerweise Monteuren auf der Baustelle überlassen, welche nicht auf die Installation von Stromschienen spezialisiert sind und fallweise die benötigten Befestigungs- und Montagemittel beschaffen. Zum Anheben von schweren Stromschienen mit einem Gewicht von über 50 kg werden Hebevorrichtungen verwendet.

[3], EP1589627B1, offenbart eine Befestigungsvorrichtung und eine Hebevorrichtung, die der Installation von Stromschienen im Bereich der Decke eines Gebäudes dienen. Die Befestigungsvorrichtung umfasst mit der Decke verbindbare, vertikal ausgerichtete Gewindestangen und ein zum Tragen wenigstens einer Stromschiene dienendes Tragelement. Das Tragelement ist derart an der Unterseite der Gewindestangen montierbar und demontierbar, dass die zu installierende Stromschiene, vor der Montage des Tragelements, senkrecht von unten zwischen die Gewindestangen einführbar, das Tragelement nach dem Einführen der Stromschiene mit der Gewindestangen verbindbar und die eingeführte Stromschiene anschliessend auf das Tragelement absenkbar ist.

Aus [4], EP1905723B1, ist eine weitere Hebevorrichtung bekannt, die ein von einer Antriebsvorrichtung anziehbares Zugelement aufweist, mittels dessen wenigstens eine damit gehaltene Stromschiene zu einer Befestigungsvorrichtung hochgezogen werden kann. Die Hebevorrichtung umfasst ein Kopfstück, das mittels Verbindungselementen mit der Befestigungsvorrichtung verbindbar ist und das wenigstens eine Umlenkrolle aufweist, über die das Zugelement umlenkbar ist, sowie eine Hilfsvorrichtung, die mit der Antriebsvorrichtung und dem Kopfstück lösbar verbunden ist, mittels der die beim Anheben der Stromschiene über das Zugelement auf die Antriebsvorrichtung einwirkende Kraft kompensierbar ist.

Gemäss [3] werden die Stromschienen nach der Installation, z.B. mittels Schrauben, bezüglich der Höhe und der Neigung justiert, um eine präzise gegenseitige Ausrichtung von miteinander zu verbindenden Stromschienen zu erzielen. Gemäss [3] ist zu berücksichtigen, dass Stromschienen kurze, relativ dicke (z.B. 10 mm) und hohe (bis zu 25 cm) Anschlusslaschen aufweisen, die mit engen Toleranzen gefertigt sind, wobei zwischen den Anschlusslaschen wenig Spielraum vorhanden ist. Die gegenseitige Kopplung von Stromschienen erfordert daher Präzisionsarbeit. Insbesondere die Montage der Kupplung zur Verbindung der Anschlusslaschen erfordert vorgängig ein präzises gegenseitiges Ausrichten der einzelnen Stromschienenbauteile.

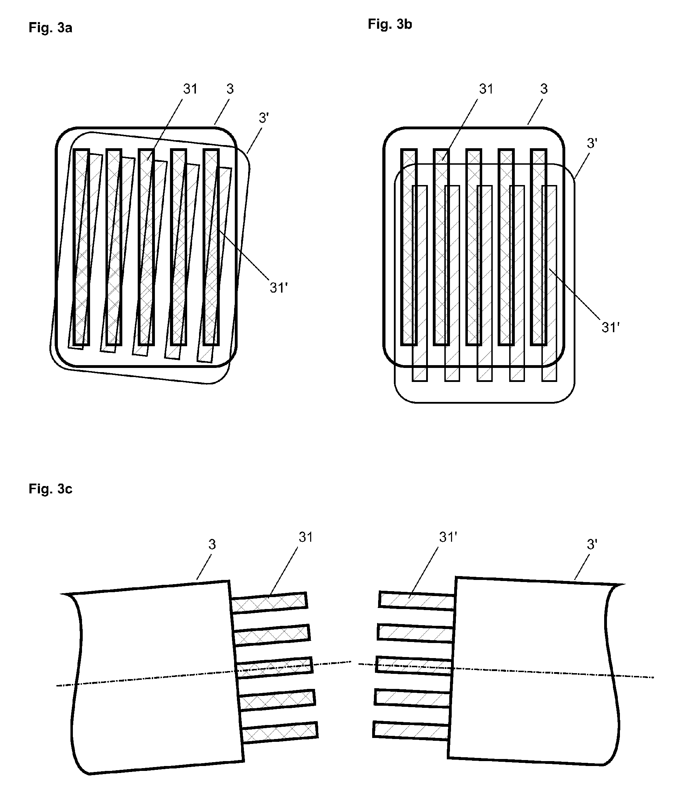

Nach dem Hochziehen der Stromschienen treten jedoch regelmässig die in den Figuren 3a, 3b und 3c dargestellten Fehlausrichtungen der Stromschienen auf.

Die beiden in Fig. 3a schematisch dargestellten Stromschienen 3, 3' sind verkantet bzw. verdreht. Die beiden in Fig. 3b gezeigten Stromschienen 3, 3' sind nicht in einer Ebene ausgerichtet; d.h. deren Achsen sind parallel ausgerichtet, jedoch vertikal und horizontal gegeneinander verschoben. Die beiden in Fig. 3c gezeigten Stromschienen 3, 3' sind nicht achsparallel zueinander ausgerichtet. Typischerweise treten diese Fehlausrichtungen in Kombination auf. Z.B. sind die zu verbindenden Stromschienen gegeneinander verdreht und nicht achsparallel ausgerichtet.

Bei der Justierung der Befestigungsvorrichtung hinsichtlich eines Parameters können daher wieder andere Parameter beeinträchtigt werden. Sofern nur ein Monteur anwesend ist, so muss er sich jeweils zwischen den verschiedenen Befestigungsvorrichtungen bewegen, um die Justierungen iterativ vorzunehmen. Dies ist besonders zeitaufwendig, falls der Monteur jeweils noch die Leiter verschieben muss.

Der vorliegenden Erfindung liegt daher die Aufgabe zugrunde, ein verbessertes Verfahren zur Installation von Stromschienen anzugeben.

Mit dem erfindungsgemässen Verfahren sollen Stromschienen anhand von Befestigungsvorrichtungen, wie sie z.B. in [3] beschrieben sind, rasch und präzise installiert werden können, ohne dass wesentliche Fehlausrichtungen auftreten, wie sie z.B. in den Figuren 3a, 3b und 3c gezeigt sind.

Ein zusätzlicher Aufwand zur Justierung der Befestigungsvorrichtungen mit den darin gehaltenen Stromschienen soll möglichst vermieden werden. Insbesondere sollen iterative Justierungen vermieden werden.

Die Installation soll derart einfach sein, dass sie auch nur von einem einzelnen Installateur durchgeführt werden kann.

Diese Aufgabe wird mit einem Verfahren gelöst, welches die in Anspruch 1 angegebenen Merkmale aufweist. Vorteilhafte Ausgestaltungen der Erfindung sind in weiteren Ansprüchen angegeben.

Das Verfahren dient der Installation von Stromschienen in wenigstens zwei im Bereich der Decke montierten Befestigungsvorrichtungen eines Gebäudes, die je ein Tragelement und zwei voneinander beanstandete Gewindestangen aufweisen. Dazu wird wenigstens eine zu installierende Stromschiene von unten zwischen die Gewindestangen eingeführt und das Tragelement anschliessend mithilfe von ersten Schraubenmuttern mit den Gewindestangen verbunden.

Erfindungsgemäss werden die vorzugsweise vertikal ausgerichteten Gewindestangen aller Befestigungsvorrichtungen je mit einer der ersten Schraubenmuttern verbunden, die auf die Höhe von Punkten einer gemeinsamen Ebene eingedreht werden, die von Laserstrahlen einer Laservorrichtung an den Gewindestangen angezeigt werden, wonach die zu installierenden Stromschienen hochgezogen, die Tragelemente an den ersten Schraubenmuttern fixiert und die Stromschienen auf die Tragelemente abgesenkt werden. Die ersten Schraubenmuttern dienen als Anschlag und gegebenenfalls als Tragelemente und können konventionelle Schraubenmuttern sein oder Gewindeelemente mit einem wunschgemäss ausgebildeten Körper, der mit einer Gewindebohrung versehen ist.

Die ersten Schraubenmuttern werden unabhängig von der Neigung des Bodens und der Neigung der Decke auf eine gemeinsame Höhe einer Ebene im Raum eingestellt, die vorzugsweise senkrecht zum Gravitationsvektor ausgerichtet ist. Die Laservorrichtung wird derart eingestellt, dass die Ebene, in der der Laserstrahl rotiert, ebenfalls senkrecht zum Gravitationsvektor ausgerichtet ist.

Nach Durchführung des erfindungsgemässen Verfahrens liegen auch die Stromschienen in einer Ebene und können z.B. anhand bekannter Stromschienenkupplungen in einfacher Weise miteinander verbunden werden. Benachbarte Stromschienenkupplungen werden axial zueinander ausgerichtet und miteinander verbunden. Nachjustierungen entfallen und sind nur dann erforderlich, wenn eine Fehlausrichtung der benachbarten Stromschienen aufgrund des Vorliegens von Fertigungstoleranzen resultiert. Fehlausrichtungen, welche in diesem Fall auftreten, sind typischerweise gering, weshalb das Mass der Nachjustierungen minimal ist.

Für die Feinjustierung wird vorzugsweise ein Justierbereich vorgesehen, innerhalb dessen die Tragelemente spielfrei justiert werden können. Dazu werden vorzugsweise elastische Distanzelemente unterhalb und/oder oberhalb der Tragelemente vorgesehen, die beim Festziehen der Montageschrauben so weit komprimiert werden, bis die optimale Ausrichtung der Stromschienen erreicht ist.

Das erfindungsgemässe Verfahren ist mit deutlich reduziertem Aufwand durchführbar. Die ersten Schraubenmuttern können anhand der Laservorrichtung, vorzugsweise einem Flächenlaser oder einem Rotationslaser, auf eine markierte Höhe gedreht werden. Z.B. wird eine Laservorrichtung vorgesehen, die einen Laserstrahl auf einer gewünschten Höhe in einer Ebene rotieren lässt, durch den die vertikal ausgerichteten Gewindestangen markiert werden.

Die schweren Stromschienen werden dann von unten mittels einer entsprechend ausgestalteten Hebevorrichtung zwischen den Gewindestangen eingeführt und auf das anschliessend montierte Tragelement abgesenkt.

Die ersten Schraubenmuttern können mehrere Funktionen erfüllen. Primär dienen die ersten Schraubenmuttern als Referenzelemente, durch die die Installationshöhe der Stromschienen einheitlich festgelegt wird. Da die Einstellung der ersten Schraubenmuttern auf die gewünschte Höhe erfolgt, bevor die Tragelemente und die Stromschienen montiert sind, kann der Laserstrahl die Gewindestangen ungehindert erreichen und markieren. Die ersten Schraubenmuttern können in einer ersten Ausgestaltung der Erfindung als Anschlag dienen, gegen den die Tragelemente geführt und anschliessend fixiert werden. Die ersten Schraubenmuttern dienen in dieser Variante nur als Anschlag, ohne die Tragelemente selbst zu halten.

In einer weiteren vorzugsweisen Ausgestaltung dienen die ersten Schraubenmuttern nicht nur als Referenzelemente und Anschläge, sondern zusätzlich als Halteelemente, die das Tragelemente auf der vorgesehenen Höhe halten.

Sofern die ersten Schraubenmuttern nur als Anschlag dienen, so können die Tragelemente von unten gegen die ersten Schraubenmuttern verschoben werden, bis der Anschlag bzw. die ersten Schraubenmuttern erreicht sind. Dazu werden die Tragelemente z.B. mit Bohrungen versehen, in die hinein die Gewindestangen axial geführt werden können. Falls die ersten Schraubenmuttern hingegen zusätzlich dem Halten der Tragelemente dienen, so werden die Tragelemente oberhalb der ersten Schraubenmuttern in die Gewindestangen eingeführt und in der Folge nach unten verschoben, bis sie auf die ersten Schraubenmuttern auftreffen und von diesen gehalten werden. Dazu werden die Tragelemente z.B. mit Bohrungen versehen werden, die zeitliche Kanalöffnungen aufweisen. Die Gewindestangen können daher durch die seitlichen Kanalöffnungen in die Bohrungen eingeführt und anschliessend verschoben werden.

Zum Anheben der Stromschienen wird an der Decke zwischen zwei benachbarten Befestigungsvorrichtungen vorzugsweise eine Umlenkrolle montiert, über die ein Zugelement geführt wird, mittels dessen die wenigstens eine Stromschiene angehoben wird. Vorzugsweise wird eine Zugvorrichtung vorgesehen, die schwerer ist als die Stromschienen oder die mit dem Gebäudekörper verbunden ist.

Vorzugsweise ist die Zugvorrichtung auf einem motorisierten Hubwagen oder einem Handhubwagen montiert, der dem Transport der Zugvorrichtung und als Gegengewicht zu den Stromschienen dient.

Zur Sicherung des Installationsvorgangs ist vorzugsweise eine Sicherungsvorrichtung vorgesehen, die mit der Zugvorrichtung oder dem Gebäudekörper verbunden ist und durch die das Zugelement derart geführt ist, dass es die Sicherungsvorrichtung beim Hochziehen der Stromschienen ungehindert durchläuft und beim Zurücklaufen in die Gegenrichtung blockiert wird. Sollte sich das Zugelement, z.B. ein Seil, von der Zugvorrichtung lösen, so wird es von der Sicherungsvorrichtung blockiert. Die angehobene Stromschiene wird daher sicher gehalten und kann auch nach dem Lösen des Zugelements von der Zugvorrichtung nicht nach unten fallen. Sicherungsvorrichtungen dieser Art werden z.B. von Installateuren verwendet, die Masten hochklettern und durch ein Seil und die Sicherungsvorrichtung gesichert sind. Eine solche Sicherungsvorrichtung ist z.B. aus [5], EP0752255A1, bekannt.

Das erfindungsgemässe Verfahren erlaubt es, Stromschienen in beliebigen Räumen auch an Stellen mit reduziertem Aufwand zu montieren, die weniger leicht zugänglich sind. Insbesondere können Stromschienen auch entlang von Wänden montiert werden.

Nachfolgend wird die Erfindung anhand von Zeichnungen näher erläutert. Dabei zeigt:
- Fig. 1: eine Befestigungsvorrichtung 1, in der zwei Stromschienen 3 nach dem erfindungsgemässen Verfahren installiert werden;
- Fig. 2: drei Befestigungsvorrichtungen 1 gemäss Fig. 1, die anhand einer Laservorrichtung 9 für die Installation von Stromschienen 3 vorbereitet werden;
- Fig. 3a: zwei achsparallel ausgerichtete Stromschienen 3, 3', die gegeneinander verdreht sind;
- Fig. 3b: zwei achsparallel ausgerichtete Stromschienen 3, 3', die vertikal gegeneinander verschoben sind; und
- Fig. 3c: die Endstücke 31 von zwei Stromschienen 3, 3', die nicht achsparallel zueinander ausgerichtet sind.

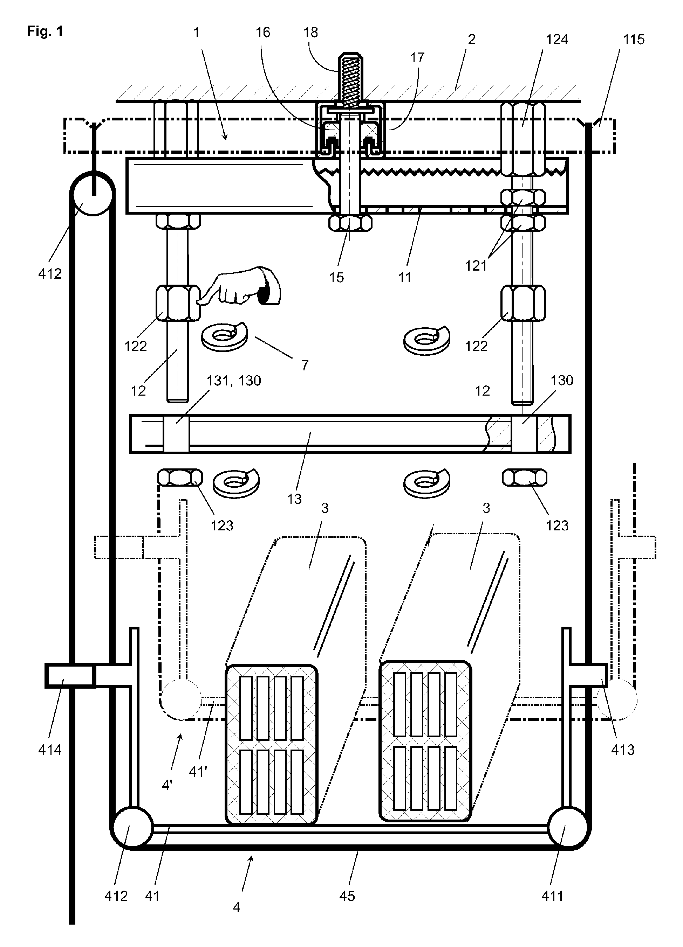

Fig. 1 zeigt eine zur Installation von Stromschienen 3 dienende Befestigungsvorrichtung 1 in einer bevorzugten Ausgestaltung. Diese Befestigungsvorrichtung 1 umfasst ein an der Decke 2 eines Gebäudes montiertes Joch 11 und zwei Gewindestangen 12, die beanstandet voneinander mit dem Joch 11 verbunden und vertikal ausgerichtet sind. In dieser vorzugsweisen Ausgestaltung ist das Joch 11 mittels einer Schraube 15 und einem mit einem Gewinde versehenen Konterelement 16 an einer wählbaren Position mit einer Schiene 17 verbunden. Die Schiene 17 ist mittels einer Schraube und einem Dübel 18 an der Decke 2 befestigt. Sofern ein Verschieben des Jochs 11 nicht erforderlich ist, so kann dieses auch direkt mit der Decke 2 verschraubt werden. Grundsätzlich wäre es auch möglich, die Gewindestangen 12 direkt in die Decke 2 einzulassen und auf das Joch 11 zu verzichten.

Die beiden Gewindestangen 12 sind mittels Schraubenmuttern 121 mit dem Joch 11 verbunden und nach dem Einführen der Stromschienen 3 mittels ersten Schraubenmuttern 122 und zweiten Schraubenmuttern 123 mit einem Tragelement 13 verbindbar, auf das die Stromschienen 3 abgestützt werden. Deckenseitig sind die beiden Gewindestangen 12 mit Distanzmuttern 124 versehen, die gegen die Decke 2 gedreht werden, um die Befestigungsvorrichtung 1 präzise auszurichten und zu stabilisieren.

Schematisch ist ferner ein Montageelement 115 gezeigt, an dem ein Zugelement 45, ein Seil oder eine Kette, einer Hebevorrichtung 4 an einer Seite der Befestigungsvorrichtung 1 fest und an der anderen Seite mittels einer Rolle 412 gehalten ist.

Das Zugelement 45 dient dem vertikalen Anheben und Absenken einer Tragvorrichtung 41, die mit Stromschienen 3 beladbar ist. Das Zugelement 45 wird z.B. von einer Zugvorrichtung in der Ausgestaltung eines Seilzugs oder Kettenzugs gezogen. Verwendbar ist z.B. die Seilwinde SW E 7 oder ein Pfaff Kettenhebezug PE 25/50/100 der Pfaff-silberblau Hebezeugfabrik GmbH, 86316 Friedberg/Derching. Möglich ist die Verwendung weiterer Hebewerkzeuge dieses Herstellers, wie Flaschenzüge oder Hebezüge. Vorzugsweise wird eine Zugvorrichtung verwendet, die schwerer ist als die zu installierenden Stromschienen. Besonders vorteilhaft kann die Zugvorrichtung in Kombination mit einem Hubwagen, z.B. einem Handhubwagen verwendet werden. Zusätzlich oder alternativ kann die Zugvorrichtung auch mit dem Gebäudekörper verbunden werden.

Nach dem Entfernen des Tragelements 13 von der Gewindestangen 11, 12 können die von der Tragvorrichtung 41 gehaltenen Stromschienen 3 durch Ziehen des Zugelements 45 vertikal zwischen die Gewindestangen 11, 12 eingefahren werden, wonach das Tragelement 13 montiert und die Stromschienen 3 darauf abgesenkt werden.

Damit die Tragvorrichtung 41 ganz nach oben gefahren werden kann, ist das Zugelement 45, gelagert mittels Rollen 411, 412, unterhalb der Tragvorrichtung 41 hindurch geführt. Die Tragvorrichtung 41 ist in einer beidseits mit der Befestigungsvorrichtung 1 verbundenen Schlaufe des Zugelements 45 gehalten, so dass die Wirkung eines Flaschenzugs resultiert und die Tragvorrichtung und die damit gehaltenen Stromschienen 3 mit der Hälfte der Gewichtskraft derselben nach oben gezogen werden können. Einerseits halbiert sich die Kraft, die für das Hochziehen erforderlich ist. Andererseits erlaubt die erfindungsgemässe Ausgestaltung der Hebevorrichtung 4, die Stromschienen 3 bis zur Decke 2 hochzuziehen.

Die in einer vorzugsweisen Ausgestaltung schematisch gezeigte Tragvorrichtung 41 weist ein U-Profil mit einem Basiselement und Seitenelementen auf, an denen Führungsvorrichtungen 413 vorgesehen sind, mittels denen die Tragvorrichtung 41 entlang des wenigsten einen Zugelements 45 geführt wird. Dies ist z.B. von Bedeutung, wenn die unbeladene Tragvorrichtung 41 hochgefahren wird, um eine installierte Stromschiene 3 zu deinstallieren.

Das freie Ende des Zugelements 45 ist durch eine mit der Tragvorrichtung 41 verbundene Sicherungsvorrichtung 414 gehalten, welche das Zugelement 45 nur in Zugrichtung passieren lässt und in Gegenrichtung blockiert. Eine solche Sicherungsvorrichtung, die verhindert, dass die angehobenen Stromschienen 3 wieder zurücklaufen können, ist z.B. aus [5], EP0752255A1, bekannt. Vorzugsweise wird die Sicherungsvorrichtung mit der Zugvorrichtung und/oder mit dem Gebäudekörper verbunden ist.

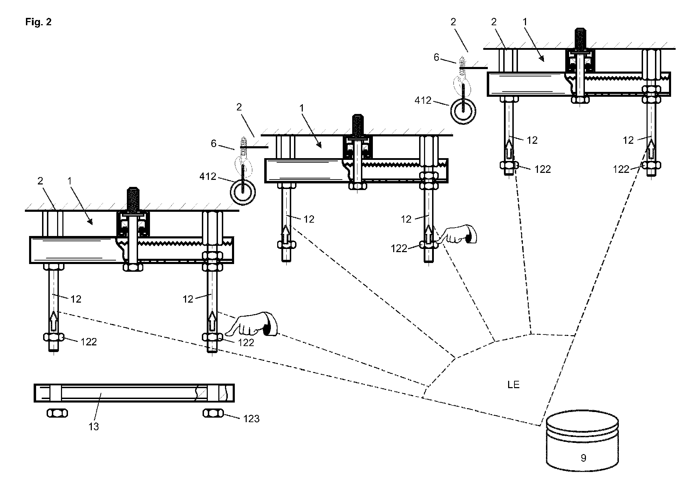

Fig. 1 zeigt ferner schematisch, dass für die Installation von Stromschienen 3 vorzugsweise zwei Hebevorrichtungen 4, 4' vorgesehen werden, die vorzugsweise synchron bedient werden. Alternativ kann auch nur eine Hebevorrichtung 4 verwendet werden, die zwischen den beiden Befestigungsvorrichtungen 1 angeordnet wird. Z.B. wird in der Mitte zwischen zwei Befestigungsvorrichtungen 1 eine Umlenkrolle 412 an der Decke 2 montiert (siehe Fig. 2), über die ein Zugseil 45 geführt wird. Am Ende des Zugseils 45 wird eine Tragvorrichtung oder eine Schlaufe vorgesehen, welche wenigstens eine Stromschiene 3 umschliesst.

Damit die Stromschienen 3 rasch und präzise montiert werden können, werden die ersten Schraubenmuttern 122 auf die Höhe von Punkten einer gemeinsamen Ebene eingedreht. Vorzugsweise werden die ersten Schraubenmuttern 122 aller Befestigungsvorrichtungen 1 in einem Raum in einem ersten Verfahrensschritt auf eine gleiche Höhe eingestellt. Diese Einstellung soll unabhängig von der Neigung von Decke oder Boden erfolgen.

Wie dies in Fig. 2 gezeigt ist, geschieht dies vorzugsweise mittels einer Laservorrichtung 9, die vorzugsweise derart ausgerichtet wird, dass der rotierende Laserstrahl in einer Ebene liegt, die senkrecht auf dem Gravitationsvektor steht. Z.B. wird die Laservorrichtung 9 gegen die Decke angehoben und parallel zum Gravitationsvektor ausgerichtet. Von den Laserstrahlen werden Positionen an den Gewindestangen 12 markiert, bis zu denen die ersten Schraubenmuttern 122 zu drehen sind. Nachdem dies erfolgt ist, werden die zu installierenden Stromschienen 3 hochgezogen. Anschliessend werden die Tragelemente 13 an den ersten Schraubenmuttern 122 fixiert und die Stromschienen 3 auf die Tragelemente 13 abgesenkt.

In einer ersten Variante dienen die ersten Schraubenmuttern 122 als Anschlag, gegen den die Tragelemente 13 von unten geführt werden. Anschliessend werden die zweiten Schraubenmuttern 123 auf die Gewindestangen 12 aufgesetzt und gegen die Tragelemente 13 gedreht, bis diese auf der gewünschten Höhe zwischen den ersten und zweiten Schraubenmuttern 122, 123 fixiert sind. Abschliessend werden die Stromschienen 3 abgesenkt und miteinander verbunden. Sofern die Stromschienenanschlüsse nicht präzise zueinander ausgerichtet sind, erfolgt eine Feinjustierung, mittels der Fertigungstoleranzen der Stromschienen ausgeglichen werden. Damit die Justierung einfacher erfolgen kann, werden vorzugsweise oberhalb und/oder unterhalb der Tragelemente 13 elastische Elemente 7 vorgesehen, durch die die Tragelemente 13 innerhalb eines Justierbereichs spielfrei gehalten sind.

In einer zweiten Variante werden die Tragelemente 13 oberhalb der vorangestellten ersten Schraubenmuttern 122 mit den Gewindestangen 12 gekoppelt und nach unten gegen die ersten Schraubenmuttern 122 geführt, bis sie auf diesen aufliegen. Die ersten Schraubenmuttern 122 haben in diesem Fall nicht nur eine Anschlagfunktion, sondern auch eine Tragfunktion. Damit die Tragelemente 13 oberhalb der ersten Schraubenmuttern 122 mit den Gewindestangen 12 verbunden werden können, sind die Bohrungen 130 in den Tragelementen 13 mit einer seitlichen Kanalöffnung 131 versehen. Die Bohrung 130 und die Kanalöffnung 131 bilden zusammen einen etwa U-förmigen Aufnahmekanal, in den eine Gewindestange 12 eingeführt werden kann.

Die Schraubenmuttern 122, 123 werden z.B. mittels Kontermuttern vorzugsweise blockiert, sodass sie sich nicht selbsttätig lösen können.

In Fig. 1 ist das Tragelement 13 rechts mit der in sich geschlossenen Bohrung 130 in Schnittdarstellung gezeigt. Links ist die Bohrung 130 durch eine Kanalöffnung 131 freigelegt. Die Tragelemente 13 werden üblicherweise entweder mit in sich geschlossenen Bohrungen 130 oder mit Bohrungen 130 und Kanalöffnungen 131 gefertigt. Die Tragelemente 13 mit den Kanalöffnungen 131 können jedoch in beiden Varianten eingesetzt werden. Dabei ist jedoch darauf zu achten, dass sich die Tragelemente 13 nicht von den Gewindestangen 12 lösen können, wenn die Schraubenmuttern 122, 123 nicht fest gezogen sind. Z.B. wird am Eingang und Ausgang der Bohrungen 130 ein Kragen vorgesehen, welcher zur teilweisen Aufnahme der Schraubenmuttern 122, 123 geeignet ist. Alternativ können die Kanalöffnungen 131 z.B. auch durch einen Schieber verschlossen werden, nachdem die Gewindestangen 12 eingeführt wurden.

Fig. 2 zeigt drei Befestigungsvorrichtungen 1 gemäss Fig. 1, die anhand einer Laservorrichtung 9 für die Installation von Stromschienen 3 vorbereitet werden. Da die Tragelemente 13 und die Stromschienen 3 noch nicht montiert wurden, ist der Blick auf alle Gewindestangen 12 frei, sodass diese mit den in einer Ebene LE abgegebenen Laserstrahlen der Laservorrichtung 9 markiert werden können. Eine Laservorrichtung 9, die für die Durchführung des Verfahrens geeignet ist, ist z.B. aus [6], EP2063222A2, bekannt.

Die ersten Schraubenmuttern 122 werden in der Folge auf die Höhe der markierten Positionen gedreht, wonach die Stromschienen 3 und die Tragelemente 13 installiert werden. Zwischen den Befestigungsvorrichtungen 1 ist ein Haken 6 in die Decke 2 eingelassen, der eine Umlenkrolle 412 hält, über die ein Zugelement 45 führbar ist, welches dem Anheben der Stromschienen 3 dient und dazu mit einer Zugvorrichtung verbunden ist. Bei dieser Ausgestaltung ist nur eine Hebevorrichtung 4 erforderlich, mittels der die Stromschienen 3 zwischen den beiden Befestigungsvorrichtungen 1 angehoben werden. Der Haken 6 wird vorzugsweise unlösbar mit der Decke 2 verbunden. In den Haken 6 wird die Umlenkrolle 412 eingehängt, in die das Zugseil 45 vorzugsweise bereits eingeschlauft ist. Die Umlenkrolle 412 wird z.B. mittels eines Teleskoprohrs eingehängt und wieder ausgehängt.

Fig. 3a zeigt zwei achsparallel ausgerichtete Stromschienen 3, 3', die gegeneinander verdreht sind. Fig. 3b zeigt zwei achsparallel ausgerichtete Stromschienen 3, 3', die vertikal gegeneinander verschoben sind. Fig. 3c zeigt die Endstücke 31 von zwei Stromschienen 3, 3', die nicht achsparallel zueinander ausgerichtet sind. Diese Fehlausrichtungen können bei Anwendung des erfindungsgemässen Verfahrens weitgehend vermieden werden. Sofern minimale Fehlausrichtungen verbleiben, so können diese durch eine Feinjustierung rasch korrigiert werden.

### Literaturverzeichnis

[1] Produktkatalog "Niederspannungs-Schienenverteiler LANZ HE 2.5.2" der LANZ OENSINGEN AG vom Januar 2013
[2] Produktkatalog "MULTIFIX" der LANZ OENSINGEN AG vom August 2001
[3] EP1589627B1
EP1905723B1
EP0752255A1
EP2063222A2

## Patentansprüche

1. Verfahren zur Installation von Stromschienen (3) in wenigstens zwei im Bereich der Decke (2) montierten Befestigungsvorrichtungen (1) eines Gebäudes, die je ein Tragelement (13) und zwei voneinander beanstandete Gewindestangen (12) aufweisen, wobei wenigstens eine zu installierende Stromschiene (3) von unten zwischen die Gewindestangen (12) eingeführt und das Tragelement (13) anschliessend mithilfe von ersten Schraubenmuttern (122) mit den Gewindestangen (12) verbunden wird, **dadurch gekennzeichnet, dass** die Gewindestangen (12) aller Befestigungsvorrichtungen (1) je mit einer der ersten Schraubenmuttern (122) verbunden werden, die auf die Höhe von Punkten einer gemeinsamen Ebene eingedreht werden, die von Laserstrahlen einer Laservorrichtung (9) an den Gewindestangen (12) angezeigt werden, wonach die zu installierenden Stromschienen (3) hochgezogen, die Tragelemente (13) an den ersten Schraubenmuttern (122) fixiert und die Stromschienen (3) auf die Tragelemente (13) abgesenkt werden.

2. Verfahren nach Anspruch 1, **dadurch gekennzeichnet, dass** die Laservorrichtung der Art eingestellt wird, dass der Laserstrahl in einer Ebene rotiert, die senkrecht auf dem Gravitationsvektor steht.

3. Verfahren nach Anspruch 1 oder 2, **dadurch gekennzeichnet, dass** die ersten Schraubenmuttern (122) als Anschlag dienen, gegen den die Tragelemente (13) geführt und anschliessend fixiert werden.

4. Verfahren nach Anspruch 3, **dadurch gekennzeichnet, dass** die Tragelemente (13) in sich geschlossene Aufnahmekanäle (130) aufweisen, in welche die Gewindestangen (12) axial eingeführt werden, wonach die Tragelemente (13) von unten gegen die ersten Schraubenmuttern (122) geführt werden.

5. Verfahren nach Anspruch 3, **dadurch gekennzeichnet, dass** die Tragelemente (13) seitlich geöffnete Aufnahmekanäle (131) aufweisen, in welche die Gewindestangen (12) seitlich eingeführt werden, wonach die Tragelemente (13) von oben gegen die ersten Schraubenmuttern (122) geführt werden.

6. Verfahren nach einem der Ansprüche 1 - 5, **dadurch gekennzeichnet, dass** die Tragelemente (13) mittels zweiten Schraubenmuttern (123) fixiert werden, die auf der den ersten Schraubenmuttern (122) gegenüberliegenden Seite der Tragelemente (13) vorgesehen sind.

7. Verfahren nach einem der Ansprüche 1 - 6, **dadurch gekennzeichnet, dass** nach der Fixierung der Tragelemente (13) eine Feinjustierung erfolgt, mittels der die Anschlüsse der Stromschienen (3) präzise zueinander ausgerichtet werden.

8. Verfahren nach einem der Ansprüche 1 - 7, **dadurch gekennzeichnet, dass** oberhalb und/oder unterhalb der Tragelemente (13) elastische Distanzelemente eingefügt werden, die bei der Feinjustierung deformiert werden.

9. Verfahren (1) nach einem der Ansprüche 1 - 8, **dadurch gekennzeichnet, dass** an der Decke (2) zwischen zwei benachbarten Befestigungsvorrichtungen (1) eine Umlenkrolle (412) montiert wird, über die ein Zugelement (45) geführt wird, mittels dessen die entsprechende Stromschiene (3) angehoben wird.

10. Verfahren (1) nach einem der Ansprüche 1 - 9, **dadurch gekennzeichnet, dass** zwischen zwei benachbarten Befestigungsvorrichtungen (1) eine oder mehrere Stromschienen (3) vorzugsweise anhand einer Zugvorrichtung angehoben werden, die schwerer ist als die angehobenen Stromschienen (3) oder die mit dem Körper des Gebäudes verbunden ist.

11. Verfahren (1) nach Anspruch 10, **dadurch gekennzeichnet, dass** die Zugvorrichtung auf einem motorisierten Hubwagen oder einem Handhubwagen montiert ist.

12. Verfahren (1) nach Anspruch 9, 10 oder 11, **dadurch gekennzeichnet, dass** das Zugelement (45) als Seil ausgebildet und derart durch eine Sicherungsvorrichtung geführt ist, dass das Zugelement (45) die Sicherungsvorrichtung beim Hochziehen der Stromschienen (3) gehindert durchläuft, die mit der Zugvorrichtung oder dem Körper des Gebäudes verbunden ist und eine Bewegung des Zugelements (45) in die andere Richtung blockiert.
